(19) **Europäisches Patentamt**
**European Patent Office**
**Office européen des brevets**

(11) Veröffentlichungsnummer : **0 163 909**
**B1**

(12) **EUROPÄISCHE PATENTSCHRIFT**

(45) Veröffentlichungstag der Patentschrift :
03.01.90

(51) Int. Cl.⁵ : **B 66 C 1/34**

(21) Anmeldenummer : **85105003.9**

(22) Anmeldetag : **25.04.85**

(54) **Lasthebemittel.**

(30) Priorität : **07.05.84 DE 3416814**

(43) Veröffentlichungstag der Anmeldung :
**11.12.85 Patentblatt 85/50**

(45) Bekanntmachung des Hinweises auf die Patenterteilung : **03.01.90 Patentblatt 90/01**

(84) Benannte Vertragsstaaten :
**AT BE CH DE FR GB IT LI LU NL SE**

(56) Entgegenhaltungen :
GB—A— 19 790
GB—A— 627 834
US—A— 1 432 117
US—A— 1 587 678
US—A— 1 773 045
US—A— 2 803 486
US—A— 2 862 743
US—A— 4 413 386

(73) Patentinhaber : **Hubert Waltermann, Eisenwarenfabrik und Gesenkschmiede GmbH & Co**
**Rötloh 4**
**D-5983 Balve 2-Garbeck (DE)**

(72) Erfinder : **Militzer, Johann**
**Hansestrasse 25**
**D-5000 Köln 90 (DE)**

(74) Vertreter : **Patentanwälte Dipl.-Ing. Conrad Köchling**
**Dipl.-Ing. Conrad-Joachim Köchling**
**Fleyer Strasse 135**
**D-5800 Hagen 1 (DE)**

**Beschreibung**

Die Erfindung betrifft einen am freien Endteil einer Kette drehbar gehaltenen Lasthaken gemäß Oberbegriff des Patentanspruches 1.

Ein derartiger Lasthaken ist durch die GB-A-19 790 bekanntgeworden.

Dabei ist als Kopplungselement zwischen dem Lasthaken und der Kette sowohl ein zweischaliger zylindrischer Bund als auch ein den Bund umfassendes Hülsenteil angeordnet.

Zudem ist der Lasthaken an seinem der Kette zugewandten Ende mehrfach abgesetzt und kompliziert geformt, weil dieses Ende des Lasthakens mit in den Bund eingelegt werden muß.

Die Gesamtfestigkeit der Verbindung wird durch die übergestülpte Hülse im wesentlichen beeinflußt, wobei die Hülse sich je nach auftretender Belastung aufbiegen kann oder aber die am oberen Ende der Hülse befindlichen, eingebördelten Randteile sich aufbiegen können, so daß keine ausreichende Sicherheit bei der Benutzung erreicht wird.

Desweiteren ist der Fertigungsaufwand erheblich, weil nicht nur zwei Schalen mit entsprechend dem Lasthakenende und der Kette angepaßten Formnestern ausgebildet werden müssen, sondern auch der Haken selbst eine komplizierte geometrische Form erhalten muß und schließlich eine zusätzliche Hülse vorzusehen ist.

Ausgehend von diesem Stand der Technik liegt der Erfindung die Aufgabe zugrunde, einen Lasthaken gattungsgemäßer Art so zu verbessern, daß mit möglichst wenig Einzelteilen einerseits eine geringe Gesamtbaulänge erreichbar ist und andererseits eine kostengünstige Fertigung sowie eine bequeme Handhabung erzielbar ist.

Die Lösung dieser Aufgabe ist im Anspruch 1 — Kennzeichenteil — bezeichnet.

Dadurch, daß der Lasthaken erfindungsgemäß eine Bohrung aufweist, die von dem Bund durchgriffen werden kann, ist der Lasthaken selbst als äußerst günstiges Formteil auszubilden, wobei der Lasthaken als Schmiedeteil geformt werden kann und lediglich die entsprechende Bohrung nachträglich durch Materialabtrag hergestellt werden muß. Komplizierte Raumformen bei der Herstellung des Hakens sind somit vermieden.

Auch der Bund selbst ist ein relativ unkompliziert geformtes Bauteil, welches aus zwei Schalen zusammengesetzt ist, wobei das Endteil einer Kette in die entsprechend angepaßten Formnester des Bundes eingelegt wird.

Der Bund selbst ist abgesetzt, so daß er sich mit einem Teil innerhalb der Bohrung befindet und andererseits an Wandungsteilen des Hakens mit dem abgestuft erweiterten Teil sich abstützt. Es ist auf diese Weise erreicht, daß bei Belastungen des Verbindungselementes ein guter Zusammenhalt erreicht wird, da ein Aufspreizen des Bundes innerhalb der Bohrung praktisch auszuschließen ist und die wesentliche Kraftübertragung über den aufgeweiteten Teil unmittelbar auf den Haken erfolgt.

Zur Lagesicherung der Einzelteile aneinander sind die entsprechenden Stifte vorgesehen. Diese stellen einfache Standardbauteile dar, wobei lediglich der Bund bzw. der Haken entsprechende Aufnahmebohrungen aufweisen muß.

Insgesamt ist äußerst kostengünstig ein höchst funktionstüchtiges Bauteil herzustellen, welches zusätzlich eine relativ geringe Gesamtbaulänge aufweist.

Es ist nicht nur günstig zu fertigen, sondern auch bequem zu handhaben.

Eine bevorzugte Weiterbildung ist im Anspruch 2 bezeichnet.

Ein Ausführungsbeispiel der Erfindung ist in der Zeichnung dargestellt und im folgenden näher beschrieben.

Es zeigt:

Fig. 1 einen Lasthaken in Seitenansicht;

Fig. 2 einen an eine Kette angehängten Lasthaken in Vorderansicht;

Fig. 3 das Endteil einer Kette, die zum Anschluß an einen Lasthaken ausgestattet ist.

In einem Lasthaken 1 ist oberhalb des Hakenmaules 2 eine zum freien Endteil einer Kette 10 gleichgerichtete, zylindrische Bohrung 4 vorgesehen, durch die das Endteil der Kette 10 von oben her zum Hakenmaul 2 gerichtet durchgesteckt ist.

Am freien Ende der Kette 10 ist ein die Kette seitlich überragender Bund 5 befestigt.

Der Bund 5 ist aus zwei im wesentlichen halbrundförmig profilierten Teilen aus Stahl zusammengefügt, welche in den einander zugewandten Seiten dem Kettenendteil angepaßte Formnester aufweisen, in die der Kettenendteil formschlüssig eingesetzt ist. Beide Teilstücke sind mittels eines quer gerichteten Schwerspannstiftes 11 miteinander lagerichtig verbunden, der zusätzlich ein Glied der Kette 10 durchgreift.

Die beiden Teile des Bundes 5 können zusätzlich, zum Beispiel durch Löten, miteinander verbunden sein.

Der Bund 5 hat einen der Bohrung 4 so angepaßten ersten, außen zylindrischen Teil 6, daß dieser sich in der Bohrung 4 frei drehen kann.

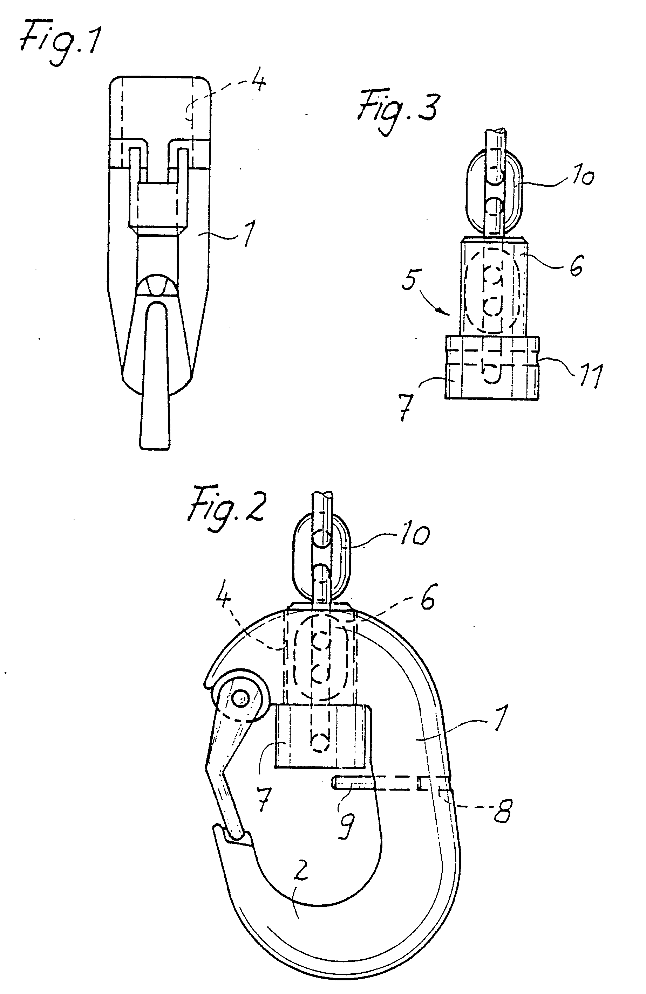

An diesen ersten Hülsenteil 6 schließt sich ein zu diesem koaxial ausgerichteter und gegenüber der Bohrung 4 im Durchmesser größerer zylindrischer Hülsenteil 7 an, der sich bei Zugbelastung, wie aus Fig. 2 ersichtlich, an die unteren Mündungsrandteile der Bohrung 4 anlegt.

Zur Festlegung des Bundes 5 relativ zum Lasthaken 1 in axialer Richtung ist in eine weitere Bohrung 8 des Lasthakens 1, die zur Längserstreckung der Bohrung 4 rechtwinklig gerichtet ist, ein Stift 9 mit Haftreibung lösbar eingesteckt, an dessen aus der Bohrung 8 herausragenden Teil sich die freie Stirnseite des Bundes 5 abstützen kann.

**Patentansprüche**

1. Am freien Endteil einer Kette (10) drehbar gehalterter Lasthaken (1), wobei am Endteil der Kette ein dieser gegenüber seitlich vorstehender, zylindrischer Bund als Drehlager befestigt ist, der aus zwei halbschalenförmigen Teilen fest zusammengefügt ist, die in den einander zugewandten Flächen dem Endteil der Kette (10) angepaßte Formnester aufweisen, dadurch gekennzeichnet, daß der Lasthaken (1) eine zum freien Endteil der Kette (10) gleichgerichtete, von der Kette (10) durchgriffene Bohrung (4) aufweist und daß der Bund (5) in dieser Bohrung drehbar gelagert ist, wobei sich der Bund bei Zugbelastung an Randteilen der Bohrung abstützt, daß der Bund (5) einen in der Bohrung (4) des Lasthakens (1) drehbar gelagerten ersten Teil (6) und einen gegenüber letzterem radial vorstehenden und am Lasthaken in axialer Richtung sich abstützenden zweiten Teil (7) aufweist, daß der erste Teil (6) des Bundes (5) mit dem dem Lasthaken (1) abgewandten Endteil aus der Lasthakenbohrung (4) herausragend ausgebildet ist, daß der Bund (5) von einem quer gerichteten, ein Glied der Kette (10) durchgreifenden Stift (11) durchdrungen ist und daß am Lasthaken (1) ein an der freien Stirnseite des Bundes (5) anlegbares Feststellorgan in Form eines zum freien Endteil der Kette (10) samt Bund (5) quer gerichteten Stiftes (9) angeordnet ist.

2. Lasthaken nach Anspruch 1, dadurch gekennzeichnet, daß das Feststellorgan, insbesondere ein Schwerspannstift (9), in eine zum freien Endteil der Kette quer gerichtete Bohrung (8) des Lasthakens (1) lösbar eingesteckt ist.

## Claims

1. A load hook (1) which is rotatably mounted on the free end part of a chain (10), wherein a cylindrical collar is fixed to the end part of the chain, projecting sideways from the latter, as the pivot bearing, which collar consists of two securely connected half-shell shaped parts which comprise recesses adapted to the shape of the end part of the chain (10) in the surfaces which face each other, characterized in that the load hook (1) comprises a through hole (4) which is orientated in the same direction as the free end part of the chain (10) and through which the chain (10) passes, in that the collar (5) is mounted so that it can rotate in this through hole, and the collar bears on the edge regions of the through hole when a tensile load is applied, in that the collar (5) comprises a first part (6) which is rotatably mounted in the through hole (4) of the load hook (1) and a second part (7) which projects radially from the first part (6) and bears in the axial direction on the load hook, in that the end of the first part (6) of the collar (5) furthest from the load hook (1) is designed to project from the through hole (4) in the load hook, in that a transverse pin (11) which passes through a link in the chain (10) passes through the collar (5), and in that a locking element, which can be inserted in the free front face of the collar (5), is provided in the form of a clamping pin (9) directed transversely to the free end part of the chain (10) and the collar (5).

2. A load hook according to claim 1, characterized in that the locking element, in particular a heavy duty clamping pin (9), is removably inserted in a through hole (8) of the load hook (1) which is directed transversely to the free end part of the chain.

## Revendications

1. Crochet pour charges (1) monté de manière à pouvoir tourner à l'extrémité libre d'une chaîne (10), l'extrémité de la chaîne comportant, fixé sur elle, comme palier de rotation, un collier cylindrique dépassant latéralement la chaîne et constitué par l'assemblage de deux parties en forme de moitiés d'enveloppe qui, dans leurs surfaces qui se font face, comportent des cavités adaptées à l'extrémité de la chaîne (10), caractérisé en ce que le crochet (1) comporte un alésage (4) qui a même direction que l'extrémité libre de la chaîne (10) et est traversé par la chaîne (10) et en ce que le collier (5) est monté de manière à pouvoir tourner dans cet alésage et prend appui, lorsqu'il est soumis à une traction sur les parties marginales de l'alésage, en ce que le collier (5) comporte une première partis (6) montée de manière à pouvoir tourner dans l'alésage (4) du crochet (5) et une deuxième partie (7) qui dépasse la première dans le sens radial et prend appui dans le sens axial sur le crochet, en ce que la première partie (6) du collier (5), à son extrémité située à l'opposé du crochet (1), dépasse de l'alésage (4), en ce que le collier (5) est traversé par une cheville (11) qui est orientée transversalement et traverse un chaînon de la chaîne (10) et en ce que le crochet (1) comporte un organe de fixation qui peut s'appliquer contre le côté frontal libre du collier (5) et est constitué par une cheville (9) placée transversalement par rapport à l'extrémité libre de la chaîne (10) et au collier (5).

2. Crochet pour charges selon la revendication 1, caractérisé en ce que l'organe de fixation, notamment la cheville (9), est engagé de manière à être amovible dans un alésage (8) du crochet (1) qui est orienté transversalement par rapport à l'extrémité libre de la chaîne.

Fig.1

Fig.3

Fig.2